# EUROPEAN PATENT SPECIFICATION

(11) **EP 4 244 186 B1**
(45) Date of publication and mention of the grant of the patent: **04.06.2025**
(21) Application number: 20811739.0
(22) Date of filing: 13.11.2020
(51) Int. Cl.: C01B 32/198, C01B 32/192, C01B 32/23

(54) **A METHOD FOR THE MANUFACTURE OF REDUCED GRAPHENE OXIDE**
VERFAHREN ZUR HERSTELLUNG VON REDUZIERTEM GRAPHENOXID
MÉTHODE DE FABRICATION D'OXYDE DE GRAPHÈNE RÉDUIT

(43) Date of publication of application: 20.09.2023
(73) Proprietor: Verdicio Solutions A.I.E., 28020 Madrid (ES)
(72) Inventor: VU, Thi Tan, 33007 Oviedo (ES); ARENAS VIVO, Ana, 28033 Madrid Madrid (ES); NORIEGA PEREZ, David, 33011 Oviedo Asturias (ES); SUAREZ SANCHEZ, Roberto, 33401 Aviles Asturias (ES)
(74) Representative: Lavoix
(86) International application number: PCT/IB2020/060682
(87) International publication number: WO 2022/101663

(56) References cited:
- WO-A1-2018/178845
- WO-A1-2018/232109
- WO-A1-2019/220228
- WO-A1-2020/229881
- WO-A1-2020/229882

## Description

The present invention relates to a method for the manufacture of reduced graphene oxide from expanded Kish graphite. In particular, reduced graphene oxide will have applications in metal industries including steel, aluminum, stainless steel, copper, iron, copper alloys, titanium, cobalt, metal composite, nickel industries, for example as coating or as a cooling reagent.

Kish graphite is a byproduct generated in the steelmaking process, especially during the blast furnace process or iron making process. Indeed, Kish graphite is usually produced on the free surface of molten iron during its cooling. It comes from molten iron at 1300-1500°C, which is cooled at a cooling rate between 0.40°C/min and 25°C/h when transported in the torpedo car or at higher cooling rates during the ladle transfer. An extensive tonnage of Kish graphite is produced annually in a steel plant.

Since Kish graphite comprises a high amount of carbon, usually above 50% by weight, it is a good candidate to produce graphene-based materials. Usually, graphene-based materials include graphene, graphene oxide and reduced graphene oxide.

It is known to produce reduced graphene oxide (rGO) by reducing the oxygen content in graphene oxide (GO). Reduced graphene oxide is composed of one or a few layers of graphene sheets containing less oxygen functional groups than Graphene oxide. Thanks to its interesting properties such as high thermal conductivity, high electrical conductivity, hydrophobicity, high specific surface area, reduced graphene oxide has many applications.

For example, reduced graphene oxide can be produced by the chemical process using a reducing agent such as hydrazine, ascorbic acid, urea, NaOH or by the thermal reduction at high temperature in an inert atmosphere. However, rGO with low oxygen content, i.e lower than 10 wt%, is very difficult to obtain. Some oxygens groups such as epoxy groups are very difficult to reduce with these processes. In addition, the obtained rGO contains lot of defects thus presenting a very low electrical conductivity.

It is also known to obtain reduced graphene oxide from Kish graphite treated according to the Hummers' method which comprises the following steps:
- the oxidation of Kish graphite with sodium nitrate (NaNO₃), sulfuric acid (H₂SO₄) and sodium or potassium permanganate (KMnO₄) and
- the reduction of graphene oxide to obtain the reduced graphene oxide.

The patent application WO2018178845 discloses a method for the manufacture of reduced graphene oxide from Kish graphite comprising:
A. The provision of Kish graphite,
B. A pre-treatment step of said Kish graphite comprising the following successive sub-steps:
   i. A sieving step wherein the Kish graphite is classified by size as follows:
      a) Kish graphite having a size below 50µm,
      b) Kish graphite having a size above or equal to 50µm, the fraction a) of Kish graphite having a size below 50 µm being removed,
   ii. A flotation step with the fraction b) of Kish graphite having a size above or equal to 50µm,
   iii. An acid leaching step wherein an acid is added so that the ratio in weight (acid amount)/(Kish graphite amount) is between 0.25 and 1 .0,
   iv. Optionally, the Kish graphite is washed and dried,
C. An oxidation step of the pre-treated Kish graphite obtained after step B) in order to obtain graphene oxide with an acid, sodium nitrate and an oxidizing agent and
D. A reduction of graphene oxide into reduced graphene oxide.

Nevertheless, when the oxidation step is performed with sodium nitrate (NaNO₃), toxic gases are produced leading to a polluting method. Moreover, the oxidation time is very long (around 3 hours).

The patent application WO2018232109 discloses exposing graphite particles to a mixture of sulfuric acid and ammonium persulfate.

The patent application WO2019220228 discloses a method for the manufacture of reduced graphene oxide from Kish graphite comprising:
A. The provision of Kish graphite,
B. A pre-treatment step of Kish graphite comprising the following successive sub-steps:
   i. A sieving step wherein the Kish graphite is classified by size as follows:
      a) Kish graphite having a size below 50µm,
      b) Kish graphite having a size above or equal to 50µm, the fraction a) of Kish graphite having a size below 50µm being removed,
   ii. A flotation step with the fraction b) of Kish graphite having a size above or equal to 50µm,
   iii. An acid leaching step wherein an acid is added so that the ratio in weight (acid amount)/(Kish graphite amount) is between 0.25 and 1.0,
C. An oxidation step of the pre-treated Kish graphite with an acid, ammonium nitrate (NH₄NO₃) and an oxidizing agent and the exfoliation of the obtained graphite oxide into graphene oxide,
D. A reduction of graphene oxide into reduced graphene oxide.

However, although the method using NH₄NO₃ is less polluting than the method using NaNO₃, there is a need to further provide an even less polluting method and to reduce the energy consumption.

Additionally, although the oxidation time is shorter using NH₄NO₃, i.e. 1 hour and 30 minutes, compared to the oxidation time of the method using NaNO₃, i.e. 3 hours, there is still a need to reduce the process duration and therefore to improve the productivity of the synthesis of reduced graphene oxide.

Therefore, the purpose of the invention is to provide an industrial method to obtain reduced graphene oxide having good quality in the shortest time possible. Additionally, the purpose of the invention is to provide a less polluting method for the manufacture of reduced graphene oxide from Kish graphite compared to the prior art methods.

This is achieved by providing a method for the manufacture of reduced graphene oxide from Kish graphite comprising:
- The provision of Kish graphite,
- The intercalation of Kish graphite with a persulfate salt and an acid at room temperature to obtain intercalated Kish graphite,
- Leaving the mixture of the intercalated Kish graphite, persulfate salt and acid at room temperature to obtain expanded Kish graphite,
- Less than eight hours after the start of the expansion step, mixing the expanded Kish graphite with at least an acid and an oxidizing agent while the gases generated during the expansion step, that comprise O₂, are still at least partially present so that the expanded Kish graphite is simultaneously oxidized, exfoliated and reduced into reduced graphene oxide, the acid being chosen among H₂SO₄, HCl, HNO₃, H₃PO₄, C₂H₂Cl₂O₂, alkylsulfonic acid and mixtures thereof and the oxidizing agent being chosen among KMnO₄, H₂O₂, O₃, H₂S₂O₈, H₂SO₅, KNO₃, NaClO and mixtures thereof.

The method according to the invention may also have the optional features listed below, considered individually or in combination:
- the expanded Kish graphite is not cleaned before mixing it with at least an acid and an oxidizing agent,
- the expansion is performed in a closed vessel,
- the expansion is performed in an open vessel,
- the expanded Kish graphite is mixed with the at least an acid and an oxidizing agent less than one hour after the start of the expansion step,
- at least 5% in volume of the maximum amount in volume of the gases generated during the expansion step are still present in the expanded Kish graphite when it is mixed with the at least an acid and an oxidizing agent,
- at least 30% in volume of the maximum amount in volume of the gases generated during the expansion step are still present in the expanded Kish graphite when it is mixed with the at least an acid and an oxidizing agent,
- the expanded Kish graphite is first mixed with the acid and then the oxidizing agent is gradually added,
- the addition of the oxidizing agent lasts from 30 to 180 s,
- the method according to the invention comprises the additional step of mixing the reduced graphene oxide with H₂O₂ to eliminate the rest of the oxidizing agent,
- The method according to the invention comprises the additional step of mixing the reduced graphene oxide with HCl, H₂SO₄, HNO₃ or mixtures thereof to remove the by-products formed during the oxidation of the expanded Kish graphite,
- The method according to the invention comprises the additional step of rinsing the reduced graphene oxide with water.

The method according to the present invention allows to produce reduced graphene oxide in an expedited manner. In particular, the retention of the gases generated during the expansion step changes the dynamic of the oxidation step and makes it possible to have oxidation, exfoliation and reduction take place simultaneously. There is thus no separate exfoliation step and reduction step after the mixing of the expanded Kish graphite with the acid and the oxidizing agent. Moreover, since the method includes notably the intercalation at room temperature, the expansion at room temperature and the oxidation without salts, it is easy to implement at industrial scale and it is less polluting than methods of the prior art.

Other characteristics and advantages of the invention will be described in greater detail in the following description, which is provided purely for purposes of explanation and is in no way intended to be restrictive.

The following terms are defined:
- Graphite means an allotropic form of the element carbon, consisting of graphene layers stacked parallel to each other in a three-dimensional, crystalline, long-range order.
- Graphite oxide means a chemically modified graphite prepared by extensive oxidative modification of the basal planes.
- Graphene oxide means one or a few layer(s) of graphene comprising oxygen functional groups including ketone groups, carboxyl groups, epoxy groups and hydroxyl groups. It can take the form of several morphological variations such as platelets and worm-like structures.
- Reduced graphene oxide is the reduced oxygen content form of graphene oxide. It can take the form of several morphological variations such as platelets, wrinkle-like structures and worm-like structures.
- Pristine graphene means that graphene is in its original condition, i.e. ideal, and does not have any defect.
- room temperature means that the chemical reaction is carried out without regulation of the temperature through cooling or heating. In other words, no attempt is made to control the temperature of the reaction. Room temperature is preferably between 0 and 45°C at atmospheric pressure, more preferably between 1 and 30°C, even more preferably between 15 and 25°C.

In a first step of the method according to the invention (step A), raw Kish graphite is provided.

Preferably, the Kish graphite is a residue of the steelmaking process. It collects at the surface of molten iron after it has been tapped from a blast furnace. As the iron cools during tapping and transporting to the steel shop, it becomes supersaturated and carbon comes out of solution as flakes of graphite which float to the surface of the iron. It can be skimmed from the molten iron fed to a basic oxygen furnace. It consists of a mix of graphite (precipitated out of the supersaturated iron), lime-rich slag (coming from the desulfurization operation), and some iron (skimmed with graphite and slag). Large lumps of iron are recovered for recycle and the remaining Kish is ready for other applications.

According to a variant of the process according to the invention, Kish graphite is preferably pre-treated (step B) to increase its purity above 90%.

The pre-treatment of Kish graphite preferably comprises the following successive sub-steps:
i. A sieving step wherein the Kish graphite is classified by size as follows:
   a. Kish graphite having a size below 50µm,
   b. Kish graphite having a size above or equal to 50µm,
   the fraction a) of Kish graphite having a size below 50 µm being removed,
ii. A flotation step with the fraction b) of Kish graphite having a size above or equal to 50µm,
iii. An acid leaching step wherein an acid is added in a ratio in weight of 0.25 and 1.0 with respect to Kish graphite,
iv. Optionally, the washing and drying of the Kish graphite.

In step B.i), the sieving step can be performed with a sieving machine.

After the sieving, the fraction a) of Kish graphite having a size below 50 µm is removed. Indeed, without willing to bound by any theory, it is believed that the Kish graphite having a size below 50µm contains a very small quantity of graphite, typically less than 10%. Preferably, the fraction a) of Kish graphite having a size below 55 µm is removed. More preferably, the fraction a) of Kish graphite having a size below 60 µm is removed.

In steps B.i) and B.ii), the fraction b) of Kish graphite has preferably a size below or equal to 300 µm, more preferably below or equal to 275 µm and even more preferably below or equal to 250 µm. Accordingly, any fraction of Kish graphite having a size above 300 or 275 or 250 µm is removed before step B.ii).

Preferably, the flotation step B.ii) is performed with a flotation reagent in an aqueous solution. For example, the flotation reagent is a frother selected among: methyl isobutyl carbinol (MIBC), pine oil, polyglycols, xylenol, S-benzyl-S'-n-butyl trithiocarbonate, S,S'-dimethyl trithiocarbonate and S-ethyl-S'-methyl trithiocarbonate. Advantageously, the flotation step is performed using a flotation device.

In step B.iii), the ratio in weight between the acid and the Kish graphite is between 0.25 and 1.0, advantageously between 0.25 and 0.9, more preferably between 0.25 and 0.8. Below 0.25, there is a risk that the Kish graphite is not purified enough. Above 0.8, there is a risk that a huge amount of chemical waste is generated.

Preferably, the acid is selected from hydrochloric acid, phosphoric acid, sulfuric acid, nitric acid and mixtures thereof.

Preferably the pre-treatment of raw Kish graphite consists of the successive sub-steps B.i to B.iv described above.

The pre-treated Kish graphite obtained after step B) of the method according to the present invention has a high purity, i.e. at least of 90%. Moreover, the degree of crystallinity is improved compared to conventional methods allowing higher thermal and electrical conductivities and therefore higher quality.

Once Kish graphite has been provided and optionally pre-treated, it is intercalated with a persulfate salt and an acid at room temperature to obtain intercalated Kish graphite (step C).

Without willing to be bound by any theory, it is believed that the persulfate salt acts like an oxidant to oxidize the edges of the Kish graphite layers. Since the persulfate salt is an important oxygen donor, the gap between two graphene layers is further expanded, allowing the acid to enter more easily between the graphene layers. At the same time, a certain amount of persulfate salt can be dragged by the acid between the graphene layers. It is believed that the persulfate salt dragged between the graphene layers will decompose and release O₂ and SO₃, causing an instantaneous pressure between the graphene layers and thus bringing out an exponential expansion of graphite at room temperature.

Preferably, the ratio in weight of persulfate salt with respect to Kish graphite is between 1 and 8, more preferably between 1 and 6 and advantageously between 1 and 5. This further improves the intercalation.

Preferably, the ratio in weight of the acid with respect to Kish graphite is between 2 and 8, more preferably between 4 and 8. Indeed, if the ratio of the acid with respect to Kish graphite is below 2, there is a risk that only a part of Kish graphite is expanded. If the ratio of the acid with respect to Kish graphite is above 8, there is a risk that the expansion occurs very slowly and that the volume expansion decreases. It is believed that the acid in excess prevents the persulfate salt from being dragged in the Kish graphite interlayer. Therefore, it prevents the release of oxygen from the decomposition of the persulfate salt and thus the exponential expansion of Kish graphite.

Preferably, the persulfate salt is chosen from the ones containing the peroxydisulfate anion S₂O₈²⁻. More preferably, the persulfate salt is chosen from Sodium persulfate (Na₂S₂O₈), Ammonium persulfate ((NH₄)₂S₂O₈) and Potassium persulfate (K₂S₂O₈) and mixtures thereof.

Preferably, the acid is a strong acid. More preferably, the acid is chosen from H₂SO₄, HCl, HNO₃, H₃PO₄, C₂H₂Cl₂O₂ (dichloroacetic acid), HSO₂OH (alkylsulfonic acid) and mixtures thereof.

Preferably, Kish graphite is first mixed with the acid and then the persulfate salt is added. The mixing of Kish graphite with the acid can be done by mechanical agitation or stirring to further improve the homogeneity of the mixture. It preferably lasts from 5 to 20 minutes. The persulfate salt is preferably added gradually.

Preferably, after the addition of acid and persulfate salt, the mixture is mechanically stirred to homogenize it. The stirring lasts preferably from 2 to 10 minutes, more preferably from 3 to 7 minutes.

Step C) lasts preferably from 2 to 30 minutes, more preferably between 2 and 10 minutes.

Once Kish graphite has been intercalated, it is expanded (step D).

The expansion is naturally performed by leaving the mixture of Kish graphite, persulfate salt and acid at room temperature.

During expansion, gases are produced. The gases in question comprise O₂ and SO₃ which result from the reaction between the acid and the persulfate salt as illustrated below in the case of sulfuric acid and ammonium persulfate:

(NH₄)₂S₂O₈ + 2 H₂SO₄ → H₂S₂O₈ + 2 NH₄HSO₄

2 H₂S₂O₈ → 2 H₂SO₄ + 2 SO₃ + O₂ when temperature reaches 65°C

In a variant of the invention, the expansion is performed in a closed vessel so that the gases generated during the expansion are more easily retained.

In another variant, the expansion is performed in an open vessel. It is believed that the gases are sufficiently intercalated between the layers of graphite to avoid their rapid release out of the mixture.

At the end of step D), the expanded Kish graphite is preferably not cleaned. Such cleaning would contribute to the release of the gases generated during the expansion step.

Preferably, step D) is stopped by the addition to the expanded Kish graphite of the reactants of the next step. When expansion is done in an open vessel, the timing of the addition of these reactants is adapted to limit the release of too much gases generated during the expansion step. The expanded Kish graphite is mixed with the reactants of the next step less than eight hours after the start of the expansion step, more preferably less than one hour after the start of the expansion step, even more preferably less than 30 minutes after the start of the expansion step. When expansion is done in a closed vessel, the timing of the addition of the reactants of the next step is not particularly limited. The closure of the vessel makes it possible to sufficiently maintain the gases between the graphene layers and to launch the next step at any given time. That said, the expanded Kish graphite is mixed with the reactants of the next step less than eight hours after the start of the expansion step, more preferably less than one hour after the start of the expansion step, to limit the gas pressure in the closed vessel.

According to one variant of the invention, step C) of intercalation and step D) of expansion are done simultaneously.

Once Kish graphite has been expanded, it is mixed at room temperature with at least an acid and an oxidizing agent to launch the oxidation of the expanded Kish graphite into graphite oxide (step E).

It has been surprisingly observed that launching the oxidation step while the gases generated during the expansion of the intercalated Kish graphite have not been fully released changes the dynamic of the reaction and makes it possible to have oxidation, reduction and exfoliation take place simultaneously. Such a reduction of the number of process steps and of the processing time is a huge improvement over the processes of the prior art.

Without willing to be bound by any theory, it is the inventors' understanding that the presence of the gases, and notably of O₂, trapped between the graphene layers, accelerates the temperature increase when the oxidizing agent is added. Consequently, the graphite oxide auto-exfoliates and reduces.

In the present case, "at least partially present" means that a part of the gases generated during the expansion step is kept trapped between the graphene layers and is not released in the atmosphere. Preferably, it represents at least 5% in volume of the maximum amount in volume of the gases generated during the expansion step. This maximum amount in volume is calculated on the assumption that 100 percent of the persulfate salt reacts with the acid to form H₂S₂O₈ which decomposes at 100 percent, according to the chemical equation described above, on the assumption that O₂ and SO₃ are ideal gases and by summing the volume in O₂ and the volume in SO₃. More preferably, the part of the gases generated during the expansion step and kept trapped between the graphene layers represents at least 10%, at least 20%, at least 30%, at least 40%, at least 50%, at least 60%, at least 70%, at least 80% or at least 90% in volume of the maximum amount in volume of the gases generated during the expansion step. The more the gases are kept trapped between the graphene layers of the expanded Kish graphite, the more they activate the simultaneous oxidation, exfoliation and reduction in step E).

The volume of gas released and consequently the percentage, in volume of the maximum amount of gases generated during the expansion step, of gas kept trapped between the graphene layers can be measured, during expansion at room temperature in a closed vessel, by connecting the vessel to a gas syringe or to a mass spectrometer. The latter is preferred for better accuracy.

The acid is chosen among H₂SO₄, HCl, HNO₃, H₃PO₄, C₂H₂Cl₂O₂ (dichloroacetic acid), HSO₂OH (alkylsulfonic acid) and mixtures thereof. Preferably the ratio in weight of acid (concentrated) with respect to Kish graphite is between 25 and 75.

The oxidizing agent is chosen among potassium permanganate (KMnO₄), H₂O₂, O₃, H₂S₂O₈, H₂SO₅, KNO₃, NaClO and mixtures thereof. More preferably, the oxidizing agent is potassium permanganate. Preferably the ratio in weight of oxidizing agent with respect to Kish graphite is between 2 and 10.

According to an embodiment of the invention, a salt is further added to the mixture of Kish graphite, acid and oxidizing agent. Preferably, the salt is chosen among NaNO₃, NH₄NO₃, KNO₃, Ni(NO₃)₂, Cu(NO₃)₂, Zn(NO₃)₂, Al(NO₃)₃ and mixtures thereof. Preferably the ratio in weight of salt with respect to the Kish graphite is between 0.2 and 2. That said, it seems that the oxidation of the expanded Kish graphite without any salt, allows for a shorter oxidation time. The ability to remove the salt from the oxidation step significantly limits pollution. Thus, preferably, the expanded Kish graphite is mixed with an acid and an oxidizing agent, without any salt. In other words, the mixture of step E) preferably consists of expanded Kish graphite, acid and oxidizing agent.

Preferably, expanded Kish graphite is first mixed with the acid and then the oxidizing agent is added. Preferably, the oxidizing agent is added gradually to avoid an excessive temperature increase. The addition preferably lasts from 30s to 180s.

Once the acid and the oxidizing agent have been added to the expanded Kish graphite, the mixture is preferably stirred until the oxidation, the exfoliation and the reduction have taken place. The stirring lasts preferably from 5 to 50 minutes, more preferably from 20 to 40 minutes.

Step E) lasts preferably between 5 min and 60 min, more preferably between 15 and 45 min. Such duration is a great improvement over the processes of the prior art.

Step E) ends when the reaction is complete.

In a preferred embodiment, the obtained reduced graphene oxide is treated to eliminate the rest of the oxidizing agent (Step F). H₂O₂ is preferably used as illustrated below in the case of potassium permanganate:

2KMnO₄ + H₂O₂+ 3H₂SO₄ → 2MnSO₄ +O₂ + K₂SO₄ + 4H₂O.

Then acids such as HCl, H₂SO₄, HNO₃ and mixtures thereof can be added to eliminate the by-products, such as Mn₂O₇ and MnO₂, formed during the oxidation/exfoliation/reduction step.

Once the reduced graphene oxide has been obtained, it is optionally rinsed with non-deionized water or deionized water to reach a neutral pH (step G).

Once the reduced graphene oxide has been obtained, it is optionally dried (step H). It can be done notably with air, by lyophilization, vacuum drying or freeze-drying. Freeze-drying is preferred since it further favors the separation of the rGO flakes.

By applying the method according to the present invention, reduced graphene oxide (rGO), comprising one or a few layer(s) of graphene having between 10 and 25% by weight of oxygen is obtained.

According to a variant of the invention, rGO is further reduced into microwave-reduced graphene oxide (MW-rGO) (step J).

Preferably, in step J), the catalyst is chosen from: pristine graphene, graphene nanoplatelet(s), graphite or graphite nanoplatelets. More preferably, the catalyst is pristine graphene. Without willing to be bound by any theory, it is believed that pristine graphene can better absorb the electromagnetic field in the form of microwaves due to the nature, the form and the properties of pristine graphene. Indeed, pristine graphene is a single layer of graphite consisting of carbons bonded together in a hexagonal honeycomb lattice. It is an allotrope of carbon in the structure of a plane of sp2 bonded atoms with which microwaves are attracted and can easily be absorbed.

Preferably, the ratio in weight of rGO with respect to the catalyst is comprised between 50 and 1000. Advantageously, the ratio in weight of rGO with respect to the catalyst is between 75 and 125. Thanks to such ratios, the reduction of rGO into MW-rGO is further improved, leading to MW-rGO having even less oxygen groups.

Preferably, the microwave frequency is between 300MHz and 100GHz, preferably between 1 and 5GHz and, for example, of 2.45GHz.

Preferably, step J) is performed with a microwave frequency heating device. Preferably, it is a microwave oven.

Advantageously, the microwave frequency heating device has a power between 100W and 100KW, more preferably between 100 and 2000 W.

Preferably, the microwaving is performed during at least 2 seconds, more preferably from 2 to 3600 seconds. This further improves the reduction of the graphene oxide.

Microwave-reduced graphene oxide (MW-rGO) comprising one or a few layer(s) of graphene having less than 10% by weight, more preferably less than 7%, by weight of oxygen can thus be obtained.

Preferably, reduced graphene oxide is deposited on metallic substrates to improve some properties such as corrosion resistance of metallic substrates.

In another preferred embodiment, reduced graphene oxide is used as cooling reagent. Indeed, reduced graphene oxide can be added to a cooling fluid. Preferably, the cooling fluid can be chosen from among: water, ethylene glycol, ethanol, oil, methanol, silicone, propylene glycol, alkylated aromatics, liquid Ga, liquid In, liquid Sn, potassium formate and mixtures thereof. In this embodiment, the cooling fluid can be used to cool down a metallic substrate.

For example, the metallic substrate is selected from among: aluminum, steel, stainless steel, copper, iron, copper alloys, titanium, cobalt, metal composite, nickel.

The invention will now be further detailed based on examples carried out for information only. They are not limiting.

### Examples:

Kish graphite was obtained from steelmaking. Then, Kish graphite was sieved to be classified by size as follows:
a) Kish graphite having a size below < 63µm and
b) Kish graphite having a size above or equal to 63µm.

The fraction a) of Kish graphite having a size below 63 µm was removed.

A flotation step with the fraction b) of Kish graphite having a size above or equal to 63µm was performed. The flotation step was performed with a Humboldt Wedag flotation machine with MIBC as frother. The following conditions were applied: Cell volume (I): 2, Rotor speed (rpm): 2000, Solid concentration (%): 5-10, Frother, type: MIBC, Frother, addition (g/T): 40, Conditioning time (s): 10 and Water conditions: natural pH, room-temperature.

Kish graphite was then leached with hydrochloric acid in aqueous solution with a ratio in weight acid / Kish graphite of 0.5. It was then washed with deionized water and dried in air at 90° C. The purity of pretreated Kish graphite was of 95%.

Then, 10 g of Kish graphite was added to 30 mL of H₂SO₄ 98% in an open vessel. The reaction mixture was continuously agitated at room temperature for 15 minutes in order to get a homogeneous mixture. Then, still at room temperature, 30 g of ammonium persulfate ((NH₄)₂S₂O₈) was gradually added into the mixture for the intercalation. The mixture was then homogenized by stirring for 5 minutes.

The mixture was then left at room temperature in the open vessel for 30 minutes during which the expansion took place.

Then, still at room temperature, 250 mL of H₂SO₄ 98% was added to the mixture containing the expanded Kish graphite, followed by the gradual addition of 35g of KMnO₄ at 0.5g.s⁻¹, to launch simultaneously the oxidation process, the exfoliation and the reduction.

At the end of the gradual addition of KMnO₄, the mixture was mechanically agitated for 30 minutes, still at room temperature, to complete the oxidation/exfoliation/reduction step.

Then 50 mL of H₂O₂ 35% was added to eliminate the rest of KMnO₄. Subsequently, 100 mL of HCl 36% was added to eliminate Mn₂O₇ and MnO₂ formed during the oxidation/exfoliation/reduction step.

Finally, the mixture was neutralized to pH 7 with deionized water and freeze-dried to obtain rGO in powder form.

The obtained reduced graphene oxide was analyzed by scanning electron microscopy (SEM), X ray diffraction spectroscopy (XRD), Transmission electron microscopy (TEM), elemental analysis and Raman spectroscopy.

These analysis confirmed that the product obtained at the end of the process according to the invention is reduced graphene oxide with 16 wt.% of O and a weight ratio C/O of 4.95, very similar to the reduced graphene oxide obtained by the processes of the prior art.

The analysis by Transmission electron microscopy also revealed that the reduced graphene oxide is in the form of nanoplatelets, i.e. nano-objects with one external dimension in the nanoscale and the other two external dimensions significantly larger. In particular, the thickness was of the order of 2 graphene layers and the width and length were micrometric. These results suggest that the exfoliation went better and the lattice distortion was lower with the process according to the invention than with the prior art.

## Claims

1. Method for the manufacture of reduced graphene oxide from Kish graphite comprising:
- The provision of Kish graphite,
- The intercalation of Kish graphite with a persulfate salt and an acid at room temperature to obtain intercalated Kish graphite,
- Leaving the mixture of the intercalated Kish graphite, persulfate salt and acid at room temperature to obtain expanded Kish graphite,
- Less than eight hours after the start of the expansion step, mixing the expanded Kish graphite with at least an acid and an oxidizing agent while the gases generated during the expansion step, that comprise O₂, are still at least partially present so that the expanded Kish graphite is simultaneously oxidized, exfoliated and reduced into reduced graphene oxide, the acid being chosen among H₂SO₄, HCl, HNO₃, H₃PO₄, C₂H₂Cl₂O₂, alkylsulfonic acid and mixtures thereof and the oxidizing agent being chosen among KMnO₄, H₂O₂, O₃, H₂S₂O₈, H₂SO₅, KNO₃, NaClO and mixtures thereof.

2. Method according to claim 1 wherein the expanded Kish graphite is not cleaned before mixing it with at least an acid and an oxidizing agent.

3. Method according to any one of claims 1 or 2 wherein the expansion is performed in a closed vessel.

4. Method according to any one of claims 1 to 3 wherein the expansion is performed in an open vessel.

5. Method according to any one of claims 1 to 4 wherein the expanded Kish graphite is mixed with the at least an acid and an oxidizing agent less than one hour after the start of the expansion step.

6. Method according to any one of claims 1 to 5 wherein at least 5% in volume of the maximum amount in volume of the gases generated during the expansion step are still present in the expanded Kish graphite when it is mixed with the at least an acid and an oxidizing agent.

7. Method according to any one of claims 1 to 6 wherein at least 30% in volume of the maximum amount in volume of the gases generated during the expansion step are still present in the expanded Kish graphite when it is mixed with the at least an acid and an oxidizing agent.

8. Method according to any one of claims 1 to 7 wherein the expanded Kish graphite is first mixed with the acid and then the oxidizing agent is gradually added.

9. Method according to claim 8 wherein the addition of the oxidizing agent lasts from 30 to 180 s.

10. Method according to any one of claims 1 to 9 comprising the additional step of mixing the reduced graphene oxide with H₂O₂ to eliminate the rest of the oxidizing agent.

11. Method according to any one of claims 1 to 10 comprising the additional step of mixing the reduced graphene oxide with HCl, H₂SO₄, HNO₃ or mixtures thereof to remove the by-products formed during the oxidation of the expanded Kish graphite.

12. Method according to any one of claims 1 to 11 comprising the additional step of rinsing the reduced graphene oxide with water.

## Patentansprüche

1. Verfahren zur Herstellung von reduziertem Graphenoxid aus Primärgraphit, umfassend:
- Bereitstellen von Primärgraphit,
- Interkalieren von Primärgraphit mit einem Persulfatsalz und einer Säure bei Raumtemperatur, um interkalierten Primärgraphit zu erlangen,
- Belassen des Gemischs aus interkaliertem Primärgraphit, Persulfatsalz und Säure bei Raumtemperatur, um expandierten Primärgraphit zu erlangen,
- Weniger als acht Stunden nach Beginn des Expansionsschritts, Mischen des expandierten Primärgraphits mit mindestens einer Säure und einem Oxidationsmittel, während die während des Expansionsschritts erzeugten Gase, die O₂ umfassen, noch zumindest teilweise vorhanden sind, sodass der expandierte Primärgraphit gleichzeitig oxidiert, exfoliert und zu reduziertem Graphenoxid reduziert wird, wobei die Säure ausgewählt ist aus H₂SO₄, Hcl, HNO₃, H₃PO₄, C₂H₂Cl₂O₂, Alkylsulfonsäure und Gemischen davon und wobei das Oxidationsmittel ausgewählt ist aus KMnO₄, H₂O₂, O₃, H₂S₂O₈, H₂SO₅, KNO₃, NaClO und Gemischen davon.

2. Verfahren nach Anspruch 1, wobei der expandierte Primärgraphit nicht aufgereinigt wird, bevor er mit mindestens einer Säure und einem Oxidationsmittel gemischt wird.

3. Verfahren nach einem der Ansprüche 1 oder 2, wobei die Expansion in einem geschlossenen Gefäß durchgeführt wird.

4. Verfahren nach einem der Ansprüche 1 bis 3, wobei die Expansion in einem offenen Gefäß durchgeführt wird.

5. Verfahren nach einem der Ansprüche 1 bis 4, wobei der expandierte Primärgraphit weniger als eine Stunde nach Beginn des Expansionsschritts mit mindestens einer Säure und einem Oxidationsmittel gemischt wird.

6. Verfahren nach einem der Ansprüche 1 bis 5, wobei mindestens 5 Volumen-% der maximalen Volumenmenge der während des Expansionsschritts erzeugten Gase noch in dem expandierten Primärgraphit vorhanden sind, wenn er mit mindestens einer Säure und einem Oxidationsmittel gemischt wird.

7. Verfahren nach einem der Ansprüche 1 bis 6, wobei mindestens 30 Volumen-% der maximalen Volumenmenge der während des Expansionsschritts erzeugten Gase noch in dem expandierten Primärgraphit vorhanden sind, wenn er mit mindestens einer Säure und einem Oxidationsmittel gemischt wird.

8. Verfahren nach einem der Ansprüche 1 bis 7, wobei der expandierte Primärgraphit zunächst mit der Säure gemischt und dann das Oxidationsmittel nach und nach hinzugefügt wird.

9. Verfahren nach Anspruch 8, wobei das Hinzufügen des Oxidationsmittels 30 bis 180 Sekunden dauert.

10. Verfahren nach einem der Ansprüche 1 bis 9, umfassend den zusätzlichen Schritt eines Mischens des reduzierten Graphenoxids mit H₂O₂, um den Rest des Oxidationsmittels zu entfernen.

11. Verfahren nach einem der Ansprüche 1 bis 10, umfassend den zusätzlichen Schritt eines Mischens des reduzierten Graphenoxids mit HCl, H₂SO₄, HNO₃ oder Gemischen davon, um die während der Oxidation des expandierten Primärgraphits gebildeten Nebenprodukte zu entfernen.

12. Verfahren nach einem der Ansprüche 1 bis 11, umfassend den zusätzlichen Schritt eines Spülens des reduzierten Graphenoxids mit Wasser.

## Revendications

1. Procédé de fabrication d'oxyde de graphène réduit à partir de graphite de Kish comprenant :
- La fourniture de graphite de Kish,
- L'intercalation de graphite de Kish avec un sel de persulfate et un acide à température ambiante pour obtenir du graphite de Kish intercalé,
- Le placement du mélange de graphite de Kish intercalé, de sel de persulfate et d'acide à température ambiante pour obtenir du graphite de Kish expansé,
- Moins de huit heures après le début de l'étape d'expansion, le mélange du graphite de Kish expansé avec au moins un acide et un agent oxydant, pendant que les gaz générés lors de l'étape d'expansion, qui comprennent de l'O₂, sont encore au moins partiellement présents, de sorte que le graphite de Kish expansé est simultanément oxydé, exfolié et réduit en oxyde de graphène, l'acide étant choisi parmi H₂SO₄, HCl, HNO₃, H₃PO₄, C₂H₂Cl₂O₂, l'acide alkylsulfonique et leurs mélanges et l'agent oxydant étant choisi parmi KMnO₄, H₂O₂, O₃, H₂S₂O₈, H₂SO₅, KNO₃, NaClO et leurs mélanges.

2. Procédé selon la revendication 1, dans lequel le graphite de Kish expansé n'est pas nettoyé avant d'être mélangé avec au moins un acide et un agent oxydant.

3. Procédé selon l'une quelconque des revendications 1 ou 2, dans lequel l'expansion est réalisée dans un récipient clos.

4. Procédé selon l'une quelconque des revendications 1 à 3, dans lequel l'expansion est réalisée dans un récipient ouvert.

5. Procédé selon l'une quelconque des revendications 1 à 4 dans lequel le graphite de Kish expansé est mélangé avec l'au moins un acide et un agent oxydant moins d'une heure après le début de l'étape d'expansion.

6. Procédé selon l'une quelconque des revendications 1 à 5, dans lequel au moins 5 % en volume de la quantité maximale en volume des gaz générés au cours de l'étape d'expansion sont encore présents dans le graphite de Kish expansé lorsqu'il est mélangé avec l'au moins un acide et un agent oxydant.

7. Procédé selon l'une quelconque des revendications 1 à 6, dans lequel au moins 30 % en volume de la quantité maximale en volume des gaz générés au cours de l'étape d'expansion sont encore présents dans le graphite de Kish expansé lorsqu'il est mélangé à l'au moins un acide et un agent oxydant.

8. Procédé selon l'une quelconque des revendications 1 à 7, dans lequel le graphite de Kish expansé est d'abord mélangé à l'acide, puis l'agent oxydant est progressivement ajouté.

9. Procédé selon la revendication 8, dans lequel l'ajout de l'agent oxydant dure de 30 à 180 s.

10. Procédé selon l'une quelconque des revendications 1 à 9 comprenant l'étape supplémentaire de mélange de l'oxyde de graphène réduit avec du H₂O₂ pour éliminer le reste de l'agent oxydant.

11. Procédé selon l'une quelconque des revendications 1 à 10 comprenant l'étape supplémentaire de mélange de l'oxyde de graphène réduit avec HCl, H₂SO₄, HNO₃ ou leurs mélanges pour éliminer les sous-produits formés lors de l'oxydation du graphite de Kish expansé.

12. Procédé selon l'une quelconque des revendications 1 à 11 comprenant l'étape supplémentaire de rinçage de l'oxyde de graphène réduit avec de l'eau.
